Europäisches Patentamt

European Patent Office

Office européen des brevets

(19)

(11) Veröffentlichungsnummer: **0 288 585**
B1

(12) **EUROPÄISCHE PATENTSCHRIFT**

(45) Veröffentlichungstag der Patentschrift:
01.08.90

(51) Int. Cl.⁵: **H01H 1/02,** H01H 11/04,
B23K 1/20

(21) Anmeldenummer: **87104367.5**

(22) Anmeldetag: **24.03.87**

(54) **Verfahren zum Erzeugen einer löt- oder schweissfähigen Unterseite an Silber-MeO-Kontaktplättchen.**

(43) Veröffentlichungstag der Anmeldung:
02.11.88 Patentblatt 88/44

(45) Bekanntmachung des Hinweises auf die Patenterteilung:
01.08.90 Patentblatt 90/31

(84) Benannte Vertragsstaaten:
AT BE CH DE FR GB LI NL SE

(56) Entgegenhaltungen:
EP-A- 0 067 983
EP-A- 0 182 182
DE-A- 2 941 423
DE-B- 2 351 226
US-A- 4 162 390
US-A- 4 636 270

(73) Patentinhaber: INOVAN GmbH & Co. KG Metalle und
Bauelemente, Industriestrasse 44,
7534 Birkenfeld-Pforzheim(DE)

(72) Erfinder: Herz, Konrad, Dr., Rainstrasse 10,
D-7534 Birkenfeld 1(DE)

(74) Vertreter: Trappenberg, Hans, Postfach 1909,
D-7500 Karlsruhe 1(DE)

## Beschreibung

Die Erfindung betrifft ein Verfahren zum Ausbilden einer löt- oder schweißfähigen Schicht auf der Rückseite (Unterseite) eines Silber-MeO-Kontaktplättchens mit Me-Anteilen, vorzugsweise aus Cadmium, Zinn, Zink, Kupfer, Wismut, Molybdän, Wolfram oder Indium, bei dem die MeO-Partikel faserförmig (spießig) ausgebildet sind und mit ihrer Faser-Längsrichtung etwa senkrecht zur Kontaktoberfläche liegen.

Moderne elektrische Schaltgeräte zeichnen sich durch eine kleine Bauweise, hohe Funktionssicherheit und große Lebensdauer aus. Diese Merkmale hängen zum wesentlichen Teil von der Gestaltung der elektrischen Kontakte, insbesondere von der Auswahl des Kontaktwerkstoffes ab. Für Schaltgeräte, die Ströme im Bereich 50 A bis 3000 A zu schalten haben, hat sich in den letzten Jahren ein Werkstoff aus einer Silberlegierung mit Metalloxidanteilen als optimal erwiesen. Eine besonders hervorzuhebende Gruppe ist hierbei eine Silber-Cadmiumoxid-Legierung.

Derartiges Kontaktmaterial kann auf verschiedene Art und Weise hergestellt werden. So kann eine Silber-Unedelmetall-Legierung durchoxidiert werden, oder es können auch oxidierte Silber/Unedelmetall-Partikel durch Pressen, Sintern und gegebenenfalls Nachprägen zusammengefügt werden. Im ersten Fall kann durch gezieltes Abbrechen des Oxidationsvorganges erreicht werden, daß die Unterseite des Silber/Unedelmetall-Bleches beziehungsweise eines entsprechenden Blockes frei von Metalloxid-Anteilen bleibt, so daß diese Unterseite ohne Schwierigkeiten zu verlöten oder zu verschweißen ist. Es kann auch umgekehrt vorgegangen werden, wie dies beispielsweise die EP-A-0 182 182 lehrt, nämlich dem Silber/Unedelmetall-Substrat örtlich gezielt Sauerstoff zuzuführen und den des Substrats mittels Laserstrahlung in der jeweils gebildeten Schmelze zu lösen. Dadurch kann wiederum eine metalloxidfreie Seite des Substrats verbleiben, die zu verlöten oder zu verschweißen ist. Eine weitere Möglichkeit, dargelegt in der US-A 4 636 270, besteht darin, eine Silber/Unedelmetall-Legierung einseitig mit einem Metall, beispielsweise Nickel, zu plattieren und sodann dieses Substrat in einer Sauerstoffatmosphäre zu glühen, so daß die Silber/Unedelmetall-Legierung durchoxidiert, das plattierte Metall jedoch oxidfrei bleibt. Bei dem aus oxidierten Silber/Unedelmetall-Partikeln zusammengefügten Material ist ein solches Vorgehen jedoch nicht möglich. Hier muß nachträglich die Unterseite so bearbeitet werden, daß ein Verlöten oder Verschweißen des aus diesem Material gefügten Kontaktes möglich ist.

Bei der pulvermetallurgischen Herstellung von Silber/Metalloxid-Werkstoffen, bei der die oxidierten Silber/Unedelmetall-Partikel durch Pressen, Sintern und Nachprägen zusammengefügt werden, kann eine ausgeprägte faserförmige (spießige) Anordnung der im Silber eingelagerten Oxide durch Strangpressen erreicht werden. Dabei werden die aus dem zugrundeliegenden Silber/Metalloxidpulver in bekannter Weise durch Pressen und Sintern hergestellten Rohlinge mit hohem Umformgrad zu stangenförmigem Halbzeug stranggepreßt. Die Oxidteilchen ordnen sich dabei in Preßrichtung faserförmig, parallel zur Stabachse (Längsrichtung) des Halbzeugs an. Je nach Größe, Art und Beschaffenheit werden die Oxide außerdem beim Umformprozeß in Längsrichtung verformt und/oder in kleinere Partikel zerteilt. Es hat sich gezeigt, daß die Eigenschaften dieser Silber/Metalloxid-Werkstoffe abhängig sind von der Orientierung der Metalloxid-Fasern zur Kontaktoberfläche.

Die für Schaltgeräte der Energietechnik benötigten Kontaktplättchen werden so aus dem Halbzeug abgetrennt, daß die Faserrichtung der Oxide entweder parallel oder senkrecht zur späteren Kontaktoberfläche liegt. Aus zahlreichen Untersuchungen ist bekannt, daß die Schalteigenschaften der Kontaktplättchen, insbesondere der Materialabbrand, bei Anordnung der Fasern senkrecht zur Schaltfläche, wesentlich günstiger sind als bei paralleler Ausrichtung. Dieser Effekt ist umso größer, je ausgeprägter die Faserstruktur der Oxide ist. Insbesondere auch an Kontaktwerkstoffen, die in einem Reaktions-Sprüh-Verfahren, beispielsweise nach der DE-B 2 929 630, hergestellt worden sind, wurde dieser Anisotropieeinfluß in verstärktem Maße beobachtet. Bei derart, auf wirtschaftliche Art und Weise, hergestellten Kontakten, ist es deshalb zur Erzielung eines verringerten Kontaktmaterialabbrands beziehungsweise einer Silbereinsparung zweckmäßig, Kontaktplättchen mit senkrecht zur Schaltfläche orientierter Oxidfaserrichtung herzustellen.

Es wurde schon erwähnt, daß infolge des hohen Metalloxidgehaltes, der im allgemeinen über 5 Gew.-% liegt, derartige Kontaktplättchen nicht direkt auf einen Kontaktträger, der im allgemeinen aus Kupfer oder einer Kupferlegierung besteht, auflötbar oder aufschweißbar sind. Um trotzdem eine Löt- beziehungsweise Schweißbefestigung der Kontaktplättchen auf ihren Kontaktträgern zu ermöglichen, muß auf der Unterseite der Kontaktplättchen eine Schicht erzeugt werden, die weitgehend frei von Metalloxid-Anteilen ist.

Dem Stande der Technik zuzuzählen sind hierbei Verfahren, die die Unterseite der Kontaktplättchen mit einer löt- und schweißfähigen Schicht abdecken. Da das Aufbringen dieser Schicht jedoch weitgehend einem Auflöten beziehungsweise einem Aufschweißen entspricht, ist es selbstverständlich mit den gleichen Schwierigkeiten behaftet wie das Aufbringen der Kontaktplättchen auf ihre Kontaktträger. Tatsächlich kann sich diese Schicht unter extremen Bedingungen vom Kontaktplättchen lösen, wodurch der Kontakt selbstverständlich unbrauchbar wird.

Die Erfindung hingegen geht einen anderen Weg dadurch, daß das Material des Kontaktplättchens auf seiner Unterseite in reduzierender Atmosphäre mittels eines überstreichenden Laserstrahls kurzzeitig oberflächig aufgeschmolzen wird und sich damit eine einstückig mit dem Kontaktplättchenmaterial verbundene metalloxidfreie Schicht, die sowohl das Löten wie auch das Schweißen ermöglicht, metalloxidfreie Schicht kann sich nicht mehr von dem Kontaktplättchenmaterial lösen, so daß derart behandelte Kontaktplättchen sicher und auch unter extremen Bedingungen fest mit einem Kontaktträger zu verbinden sind.

Um ein einwandfreies Löten beziehungsweise Schweißen zu ermöglichen, wird nach, der Erfindung vorgeschlagen, die Laserleistung so einzustellen, daß sich eine Aufschmelztiefe zwischen 0,1 mm und 0,5 mm ergibt. Diese Schmelze kommt nun in intensiven Kontakt mit der reduzierenden Atmosphäre - vorteilhafterweise Wasserstoffgas oder ein Wasserstoff/Stickstoff-Gasgemisch - wodurch das Metalloxid zu Metall reduziert wird, ohne daß sich hierbei der Verbund zu dem Kontaktplättchenmaterial löst.

Auf der Zeichnung sind schematisch zwei Vorrichtungen zur Durchführung des Verfahrens dargestellt, und zwar zeigen:

Fig. 1 einen Laserstrahl mit Umlenkung und
Fig. 2 einen aufgeweiteten Laserstrahl.

In einem geschlossenen Arbeitsraum 1 befinden sich auf einer Unterlage beziehungsweise einem den Arbeitsraum 1 durchwandernden Band 2 Kontaktplättchen 3, die mit der Unterseite nach oben auf das Band 2 aufgelegt sind.

Der Arbeitsraum wird, wie durch die Pfeile 4, 5 angedeutet, von einem reduzierenden Gas oder einem entsprechenden Gasgemisch durchströmt, so daß der gesamte Arbeitsraum 1 von diesem durchströmenden Gas beziehungsweise Gasgemisch gefüllt ist. Über ein laserstrahldurchlässiges Fenster 6 wird ein Laserstrahl 7 geführt, der über eine Umlenkeinrichtung 8; – beispielsweise einen Spiegel 8 – wie durch die Pfeile 9, 10, angedeutet, rasterförmig über die Kontaktplättchen 3 geführt wird.

Hierbei wird das Material der Unterseite der Kontaktplättchen 3 kurzzeitig aufgeschmolzen und in der reduzierenden Atmosphäre reduziert, wodurch sich eine löt- und schweißfähige, zwischen 0,1 mm und 0,5 mm liegende Schicht ergibt.

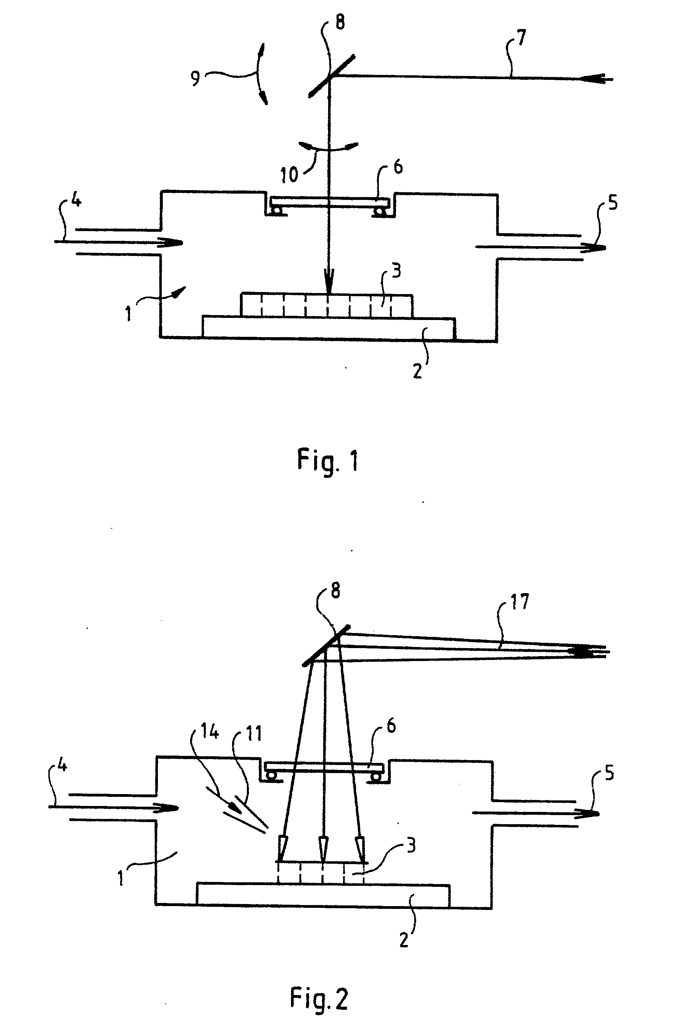

Fig. 2 zeigt eine Vorrichtung mit aufgeweitetem Laserstrahl 17, der in der Darstellung nach Umlenkung durch den Spiegel 8 die gesamte aufzuschmelzende Oberfläche des Kontaktplättchens 3 erreicht. Zusätzlich ist auch hier noch eine Düse 11 vorgesehen, die gezielt reduzierendes Gas 14 auf die aufzuschmelzende Oberfläche des Kontaktplättchens 3 führt.

## Patentansprüche

1. Verfahren zum Ausbilden einer löt- oder schweißfähigen Schicht auf der Rückseite eines Silber/ MeO-Kontaktplättchens mit Me-Anteilen, vorzugsweise aus Cadmium, Zinn, Zink, Kupfer, Wismut, Molybdän, Wolfram oder Indium, bei dem die MeO-Partikel faserförmig ausgebildet sind und mit ihrer Faser-Längsrichtung etwa senkrecht zur Kontaktoberfläche liegen, dadurch gekennzeichnet, daß das Material in reduzierender Atmosphäre (4, 5) mittels eines Laserstrahls (7) kurzzeitig oberflächig aufgeschmolzen wird.

2. Verfahren nach Anspruch 1, dadurch gekennzeichnet, daß als reduzierende Atmosphäre (4, 5) Wasserstoffgas oder ein Wasserstoff/Stickstoff-Gasgemisch eingesetzt wird.

3. Verfahren nach Anspruch 1, dadurch gekennzeichnet, daß die Oberfläche des aufzuschmelzenden Materials durch einen Bearbeitungsvorgang wie Schleifen, Bürsten, Schmirgeln, Sandstrahlen o.ä. aufgerauht wird, um die Reflexion der Oberfläche zu verringern.

4. Verfahren nach Anspruch 1, dadurch gekennzeichnet, daß die Oberfläche des aufzuschmelzenden Materials durch gezielte Schwärzung vorbehandelt wird, um die Reflexion der Oberfläche zu verringern.

5. Verfahren nach Anspruch 1, dadurch gekennzeichnet, daß die Laserleistung je nach Strahlquerschnitt, Impulsdauer beziehungsweise Strahlgeschwindigkeit und der Oberflächenbeschaffenheit der zu bearbeitenden Oberfläche so eingestellt wird, daß sich eine Aufschmelztiefe zwischen 0,1 mm und 0,5 mm ergibt.

6. Verfahren nach Anspruch 1, dadurch gekennzeichnet, daß die Oberfläche mit defokussiertem beziehungsweise künstlich aufgeweitetem Laserstrahl aufgeschmolzen wird, wobei die Aufweitung je nach Leistung des Lasers so groß gewählt wird, daß nur ein Bruchteil oder aber auch die gesamte Kontaktplättchenoberfläche gleichzeitig vom Laserstrahl erfaßt wird.

7. Verfahren nach Anspruch 6, dadurch gekennzeichnet, daß der Laserstrahl je nach Strahlquerschnitt des aufgeweiteten Strahls entweder die gesamte Kontaktoberfläche gleichzeitig erfaßt oder diese rasterförmig überstreicht.

## Revendications

1. Procédé pour former une couche susceptible de brasage ou de soudage sur la face arrière d'une plaquette de contact argent-MeO qui contient des constituants métalliques, de préférence en cadmium, étain, zinc, cuivre, bismuth, molybdène, tungstène ou indium, et dans laquelle les particules de MeO présentent la forme de fibres, ces fibres étant sensiblement perpendiculaires à la surface de contact par leur direction longitudinale, caractérisé par le fait que le matériau est fondu superficiellement pendant une courte durée et dans une atmosphère réductrice (4, 5) au moyen d'un rayon laser (7).

2. Procédé selon la revendication 1, caractérisé par le fait que l'on utilise comme atmosphère réductrice (4, 5) de l'hydrogène gazeux ou un mélange gazeux hydrogène-azote.

3. Procédé selon la revendication 1, caractérisé par le fait que l'on rend rugueuse la surface du matériau à fondre par une opération d'usinage, comme par polissage, brossage, ponçage, sablage ou similaire, afin de diminuer la réflexion par la surface.

4. Procédé selon la revendication 1, caractérisé par le fait que l'on traite au préalable la surface du matériau à fondre par un noircissement approprié, afin de diminuer la réflexion par la surface.

5. Procédé selon la revendication 1, caractérisé par le fait que l'on règle la puissance du laser selon la section transversale du rayon, la durée de l'impulsion ou la vitesse du rayon, respectivement, et la qualité de la surface du matériau à traiter, de manière à obtenir une profondeur de fusion comprise entre 0,1 mm et 0,5 mm.

6. Procédé selon la revendication 1, caractérisé par le fait que l'on fond la lsurface au moyen d'un rayon laser défocalisé ou artificiellement élargi, respectivement, l'élargissement étant choisi selon la puissance du laser avec une valeur telle que seule une fraction de la surface de la plaquette de contact, ou encore la totalité de celle-ci, soit frappée simultanément par le rayon laser.

7. Procédé selon la revendication 6, caractérisé par le fait que le rayon laser, selon la section transversale du rayon élargi, soit frappe simultanément la totalité de la surface de contact, soit l'explore par balayage.

## Claims

1. A method of forming a weldable or solderable layer on the back side of a silver/MeO contact plate with Me components, preferably of cadmium, tin, zinc, copper, bismuth, molybdenum, tungsten or indium, in which the MeO-particles are fibrous and are disposed with the longitudinal direction of their fibres approximately perpendicular to the contact surface, characterised in that the material is briefly subjected to fusion at its surface in a reducing atmosphere (4, 5) by means of a laser beam (7).

2. A method according to claim 1 characterised in that hydrogen gas or a hydrogen/nitrogen gas mixture is used as the reducing atmosphere (4, 5).

3. A method according to claim 1 characterised in that the surface of the material to be fused is roughened by a processing operation such as grinding, brushing, grinding with emery, sand blasting or the like in order to reduce the reflection of the surface.

4. A method according to claim 1 characterised in that the surface of the material to be fused is subjected to a preliminary treatment by controlled blackening in order to reduce the reflection of the surface.

5. A method according to claim 1 characterised in that the laser output is set in respect of beam cross-section, pulse duration or beam velocity and the surface finish of the surface to be processed, in such a way as to provide a fusion depth of between 0.1 mm and 0.5 mm.

6. A method according to claim 1 characterised in that the surface is fused with defocussed or artificially expanded laser beam, wherein the expansion is so selected, in accordance with the respective output of the laser, that only a fraction or however also the entire contact plate surface is simultaneously acted upon by the laser beam.

7. A method according to claim 6 characterised in that the laser beam, depending on the respective beam cross-section of the expanded beam, either simultaneously acts upon the entire contact surface or passes over same in a grid configuration.

Fig. 1

Fig.2